# EUROPEAN PATENT APPLICATION

(11) **EP 0 860 816 A1**
(43) Date of publication of application: **26.08.1998**
(21) Application number: 98102736.0
(22) Date of filing: 17.02.1998
(51) Int. Cl.: G11B 5/64, G11B 5/855, G11B 5/00

(54) **Magnetic recording medium and system**

(30) Priority: 20.02.1997 JP 36053/97; 26.06.1997 JP 169920/97
(71) Applicant: Hitachi, Ltd., Chiyoda-ku, Tokyo 101-0062 (JP)
(72) Inventor: Haginoya, Chiseki, Hiki-gun, Saitama-ken 350-0321 (JP); Koike, Kazuyuki, Tokyo 190-0182 (JP); Matsuyama, Hideo, Hannou-shi, Saitama-ken 357-0041 (JP); Kohashi, Teruo, Hiki-gun, Saitama-ken 350-321 (JP); Furukawa, Takashi, Hiki-gun, Saitama-ken 350-0321 (JP); Kiguchi, Masashi, Saitama-ken 350-0321 (JP); Ishibashi, Masayoshi, machi, Hiki-gun, Saitama-ken 350-0321 (JP)
(74) Representative: Strehl Schübel-Hopf & Partner

(57) **Abstract**

The method of fabricating a high density magnetic recording medium even with a smaller aspect ratio but with greater magnetic anisotropy is disclosed, wherein after depositing a material with a positive magnetostriction constant at a heated state after holes are fabricated in a substrate from the upward direction, the substrate is cooled to be put back to room temperature. Due to the magnetostriction effect of the compression stress applied on the magnetic particles in the holes, the easy axis of magnetization is formed. Otherwise, by inducing volume change following the phase transition around the magnetic particles, recording is effected under the control of the magnetic anisotropy of the magnetic particles.

## Description

### BACKGROUND OF THE INVENTION

The present invention relates to a magnetic recording medium and more specifically relates to a magnetic recording medium using magnetic particles aligned in a matrix form with high density and a magnetic recording system using the same.

Most of current magnetic recording medium are fabricated, by growing a continuous magnetic layer on a substrate by vacuum evaporation and the like. On such magnetic recording medium, for example, the direction of magnetization of a recorded bit is the head running /reverse direction for in-plane recording, or is the upward/downward direction for perpendicular recording and magneto-optical recording under control, whereby information is recorded by corresponding the individual directions to 0/1 or 1/0.

Following the improvement of the recording density of magnetic recording medium, each recorded bit is likely to be decreased. It is however remarked that due to such a smaller recorded bit, a magnetic recording medium with a continuous magnetic layer possibly causes fluctuation of the magnetization direction through thermal agitation , namely easy loss of information.

Compared with such conventional continous magnetic recording layers, attempts to improve recording density have been made in recent years to fabricate an array of magnetic particles isolated by non-magnetic material to record one bit per one particle. For example, it is described in J. Appl. Phys. 76 (1994) pp.6673 - 6675 that a quantum magnetic disk (QMD) capable of high density recording at low noise may possibly be fabricated by aligned isolated magnetic particles. Because the volume of a magnetic material per one bit is reduced for recording on non-continuous magnetic particles such as QMD compared with continuous magnetic recording medium, the effect of thermal agitation is particularly significant, disadvantageously for information storage.

Using shape magnetic anisotropy, for example, a magnetic particles with a larger dimension along the direction perpendicular to the disk surface, non continuous magnetic recording medium such as QMD have a stronger resistance for thermal agitation. Due to the structure, disadvantageously, the fabrication of recording medium or the recording of information nevertheless involves difficulty.

### SUMMARY OF THE INVENTION

It is an object of the present invention to provide a recording medium having larger resistance against thermal agitation and capable of ready recording, compared with an isolated magnetic particle with lower resistivity against thermal agitation due to the volume reduction of the magnetic material per one bit; and to provide a recording system using the same.

More specifically, it is an object of the present invention to improve the thermal agitation resistance not through shape magnetic anisotropy but through control of the magnetic anisotropy of magnetic particles due to mechanical stress over the magnetic particles from a substrate sustaining the magnetic particles, thereby attaining ready recording, and to realize a recording system using the same.

In accordance with the present invention, two different embodiments are provided, depending on the generation mode of stress to be applied on magnetic particles.

In a first embodiment, magnetic particles and a non-magnetic substrate (arranged in a manner to enclose the magnetic particles) are prepared from two materials with different thermal expansion coefficients, while stress is to be applied on the magnetic particles during the fabrication process of arranging the magnetic particles on the substrate. Thus, in this way, stress is absolutely applied on the magnetic particles, whether or not the data recorded on the magnetic particles is 1/0.

In a second embodiment, magnetic particles are prepared from a material with magnetic anisotropy when given stress is applied on the magnetic particles, while a non-magnetic substrate arranged in such a manner to enclose the particles should have thermal hysteresis of volume change. At the method, thus, stress is to be applied on the magnetic particles, only when the data recorded on the magnetic particles is either 1 or 0. Therefore, in this embodiment, information is recorded, by matching "the detectable state" and "the non-detectable state" of a certain magnetized component (for example, perpendicular component) to 1 and 0, respectively, of each recording data. For example, magnetization toward perpendicular direction should correspond to 1 while magnetization toward in-plane direction should correspond to 0. Then, such detectable state should be stored in a stable fashion, owing to the magnetic anisotropy due to the stress applying from the substrate.

### BRIEF DESCRIPTION OF THE DRAWINGS

Figs.1A to 1E are cross sectional views of one example of the fabrication chart of a magnetic recording medium according to the first embodiment of the present invention;
Figs.2A to 2F are cross sectional views of another example of the fabrication chart of a magnetic recording medium according to the first embodiment of the present invention;
Figs.3A to 3G are cross sectional views of still another example of the fabrication chart of a magnetic recording medium according to the first embodiment of the present invention;
Figs.4A to 4C are schematic cross sectional views of three examples of reading information recorded on the magnetic recording medium of the first embodiment of the present invention;
Figs.5A to 5C are schematic cross sectional views of three examples of writing recorded information on the magnetic recording medium of the first embodiment of the present invention;
Figs.6A to 6B are schematic explanatory views of the fundamental functions of the magnetic recording medium of the second embodiment of the present invention;
Figs.7A to 7G are cross sectional views of one example of the fabrication chart of a magnetic recording medium according to the second embodiment of the present invention;
Fig.8 shows graphs depicting the relation of the temperature of barium metatitanate (BaTiO₃) for use in the magnetic recording medium of the second embodiment of the present invention with the lattice constant;
Figs.9A and 9B are schematic views depicting one example of the recording processes on the magnetic recording medium of the second embodiment of the present invention;
Figs.10A and 10B are schematic views depicting another example of the recording processes on the magnetic recording medium of the second embodiment of the present invention;
Figs.11A and 11B are schematic views depicting one example of the recording processes on the magnetic recording medium of the second embodiment of the present invention; and
Fig.12 is a schematic cross sectional view of one example of the relation of the principal part of the head part for reading and writing recorded information in the magnetic recording medium of the second embodiment of the present invention with the magnetic recording medium of itself.

### DESCRIPTION OF THE PREFERRED EMBODIMENTS

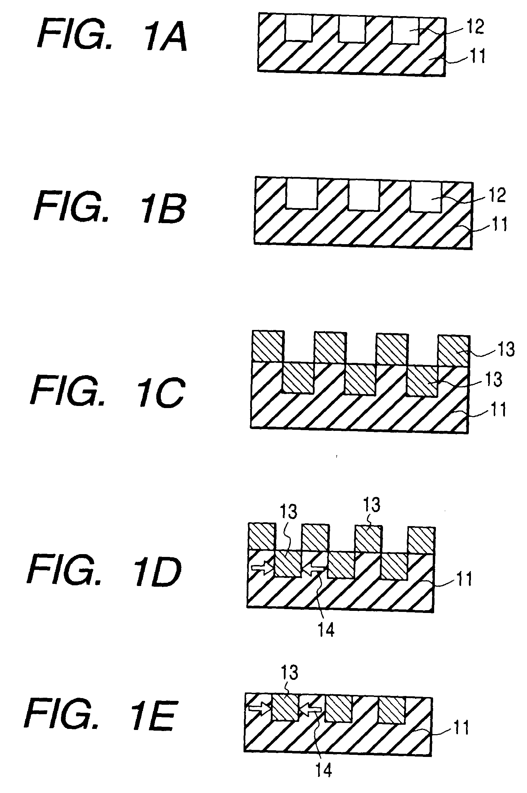

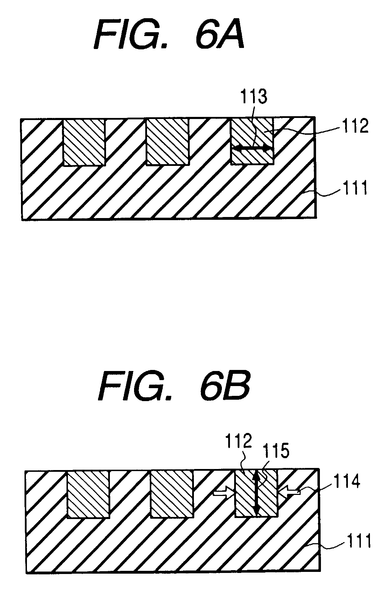

The present invention will now be described in the following examples. Examples shown in Figs.1 to 5 correspond to the first embodiment (EMBODIMENT I); and examples shown in Figs.6 to 12 correspond to the second embodiment (EMBODIMENT II).

### EMBODIMENT I

Figs.1A to 1E are cross sectional views of one example of the fabrication chart of a magnetic recording medium according to the first embodiment of the present invention, wherein compression stress is to be applied on the magnetic particles in parallel to the surface of the recording medium. As shown in Fig.1A, a great number of perpendicular holes 12 in a cylindrical or pillar shape are arranged regularly at the upper part of aluminum substrate 11. These holes are prepared for example by electron beam lithography, having a hole diameter of 100 nm and a depth of 100 nm. By heating the substrate 11 to 500 °C, for example, the holes 12 expand, together with the substrate 11, as shown in Fig.1B. As shown in Fig.1C, iron 13 (material with a positive magnetostriction constant) is deposited perpendicularly to the surface of the substrate 11 at that state. Consequently, the inside of the holes 12 is filled with iron, while iron 13 is also deposited on the surface of the substrate 11. After a deposition time passes sufficiently enough for the inside of the holes 12 to be filled with iron, room temperature is restored. As shown in Fig.1D, then, the entirety shrinks, but compression stress 14 as shown by the arrow is applied around the iron 13 in such pillar shape because the linear expansion coefficient of the aluminium composing the substrate 11, namely 23.1 × 10⁻⁶ (at 293 K), is larger than the linear expansion coefficient of the iron embedded in the holes 12, namely 11.8 × 10⁻⁶ (at 293 K). The direction of the easy axis of iron 13 in the pillar shape under sideward applying of the compression stress 14 turns perpendicular to the surface of the substrate 11. By removing the iron deposited on the parts excluding the holes 12 by procedures such as mechanical polishing or chemical and mechanical polishing, magnetic particles 13 of iron with perpendicular anisotropy can be fabricated, as shown in Fig.1E.

The aspect ratio in this example is 1, which is rather smaller. From such an aspect ratio, any force sustaining magnetism via shape magnetic anisotropy can hardly be expected. At such a state for use at room temperature, however, compression stress 14 as shown by the arrow is to be applied around the magnetic particles 13 in the pillar shape, so that larger perpendicular anisotropy can be retained owing to the magnetostriction due to the compression stress 14. Owing to the perpendicular anisotropy due to the compression stress 14, a larger force sustaining magnetism can be obtained.

Furthermore, the substrate 11 may be of any shape such as disk and card. The magnetic particles may comprise any material with a positive magnetostriction constant and a smaller thermal expansion coefficient than that of the substrate, including alloys, mixtures, and compounds such as oxides and nitrides, other than iron. The material composing the substrate may be any material with a larger thermal expansion coefficient than that of the magnetic material , other than aluminium.

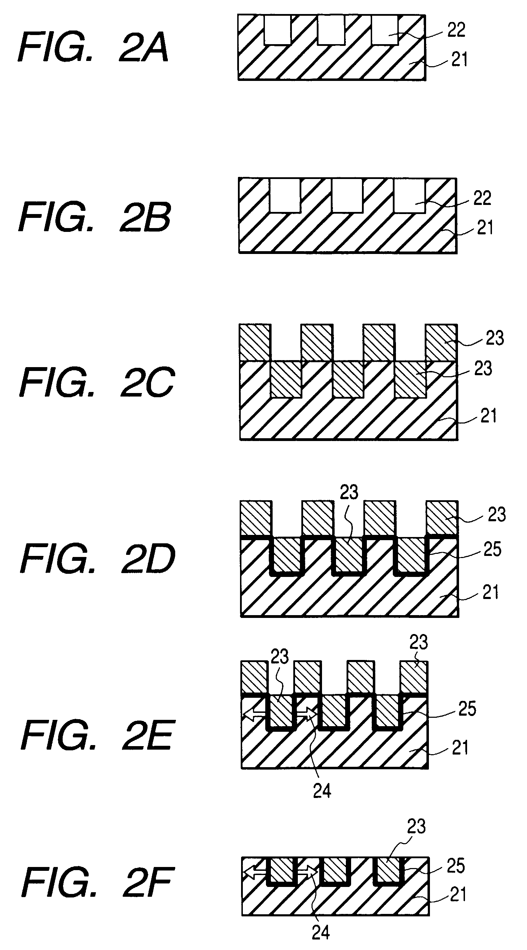

Figs.2A to 2F are cross sectional views of another example of the fabrication chart of a magnetic recording medium according to the first embodiment of the present invention, wherein tensile stress is to be applied on the magnetic particles in parallel with the surface of the recording medium. As shown in Fig.2A, a great number of holes 22 in a perpendicular cylinder shape are arranged regularly at the upper part of the substrate 21 composed of silicon. By heating the substrate 21 to 500 °C, for example, the holes 22 expand together with the substrate 21, as shown in Fig.2A. In the present Example, these holes are fabricated for example by electron beam lithography, and the resulting holes are of a hole diameter of 100 nm and a depth of 100 nm. As shown in Fig.2C, cobalt 23 (with a negative magnetostriction constant) is deposited perpendicularly to the surface of the substrate 21 at that state. As shown in Fig.2C, consequently, the holes 22 in the substrate 21 are filled with cobalt 23, while the surface of the substrate 21 is deposited with cobalt 23. After a deposition time passes sufficiently enough for the cobalt 23 to fill the holes 22 in the substrate 21, the temperature is elevated under control, to subsequently maintain the substrate at 750 °C for 5 seconds. As shown in Fig.2D, consequently, the boundary 25 between the cobalt 23 and the substrate 21 is prepared as an alloy. After the temperature again restores room temperature, thereafter, the entirety shrinks as shown in Fig.2E, but because the linear expansion coefficient of silicon composing the substrate 21, namely 2.6 × 10⁻⁶ (at 293 K) smaller than the linear expansion coefficient of cobalt 23 embedded in the holes 22, namely 13.0 × 10⁻⁶ (293 K), the cobalt 23 in the form of magnetic particle receives tensile stress 24 through the cobalt-silicon alloy 25 from the substrate 21 and the periphery thereof. The direction of the easy axis of the cobalt 23 under tensile stress 24 along the radius direction of the magnetic particles in the cylindrical shape is perpendicular to the surface of the substrate 21. By removing the iron deposited on the parts excluding the holes 12 by procedures such as mechanical polishing or chemical and mechanical polishing, magnetic particles 23 of cobalt with perpendicular anisotropy can be produced, as shown in Fig.2F.

Thus, magnetic particles of cobalt with a smaller aspect ratio but with sufficiently high perpendicular anisotropy due to the applying of the tensile stress 24 from the periphery thereof as shown by the arrow, can be obtained.

For preparing an alloy from the deposited magnetic material 23 and the substrate 21, additionally, not only the periphery of the magnetic material 23 but also the entirety thereof can satisfactorily be prepared as an alloy, provided that the magnetic material 23 has a negative magnetostriction constant and is ferromagnetic.

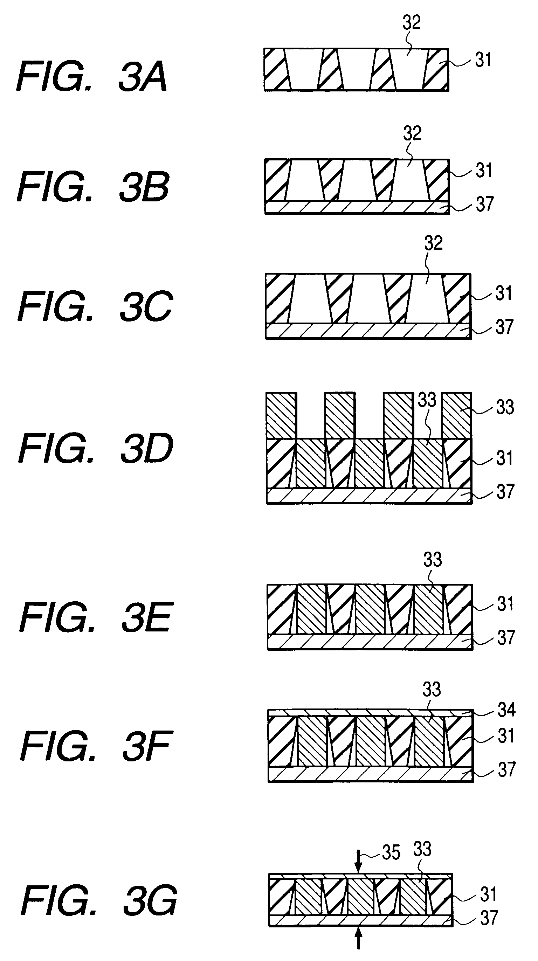

Figs.3A to 3G are cross sectional views of still another example of the fabrication chart of a magnetic recording medium according to the first embodiment of the present invention, wherein compression stress is to be applied on the magnetic particles perpendicularly to the surface of the recording medium. As shown in Fig.3A, firstly, a great number of holes each of a cross section of a trapezoidal shape are regularly arranged on substrate 31 composed of silicon. These holes are formed by modifying for example etching conditions for electron beam lithography, and the holes are of an upper hole diameter of 150 nm and a lower hole diameter of 100 nm and a depth of 100 nm. After the holes 31 with a cross section of an inverse trapezoidal shape are formed on the substrate 31, the substrate 31 is upside down as shown in Fig.3B so that the hole diameter on the side of upper opening might be smaller, to bond silicon 37 as the same material as that of the substrate 31 onto the bottom face to shape a bottom board. As shown in Fig.3C, the substrate 31 is heated to 500 °C at that state, to expand the holes 32 together with the substrate 31. As shown in Fig.3D, cobalt 33 (substance with a negative magnetostriction constant) is deposited perpendicularly to the surface with a smaller hole diameter of the substrate 31. Because the opening of the holes 32 is small in the present example, the holes 32 are not wholly filled with cobalt 33 but the inner peripheral face of the holes 32 is left vacant. After a time passes for sufficient deposition along the depth direction of the holes, the unnecessary part on the surface is polished while the substrate remains at such high temperature state, as shown in Fig.3E. At that state, furthermore, transparent cover plate 34 is fixed on the surface of the substrate 31, as shown in Fig.3F. As shown in Fig.3G, the entirety shrinks when the temperature restores room temperature, but because the linear expansion coefficient of silicon composing the substrate 31 is smaller than the linear expansion coefficient of cobalt embedded in the holes 32, compression stress 35 is applied on the cobalt 33 from the substrate 31 and the cover plate 34. Because vacant space still remains in the holes 32, the cobalt 33 in the form of such pillar magnetic material never receives any force along the radius direction from the side face of the substrate 31. The direction of the easy axis of the pillar cobalt applied with the compression stress 35 along the upward and downward directions is perpendicular to the surface of the substrate 31.

Because the magnetic particles 33 with a smaller aspect ratio are applied with compression stress 35 along the upward and downward directions at the routine state of use at room temperature, magnetic particles of cobalt with larger perpendicular anisotropy due to the compression stress 35, additionally having the resultant larger coercive force, can be obtained.

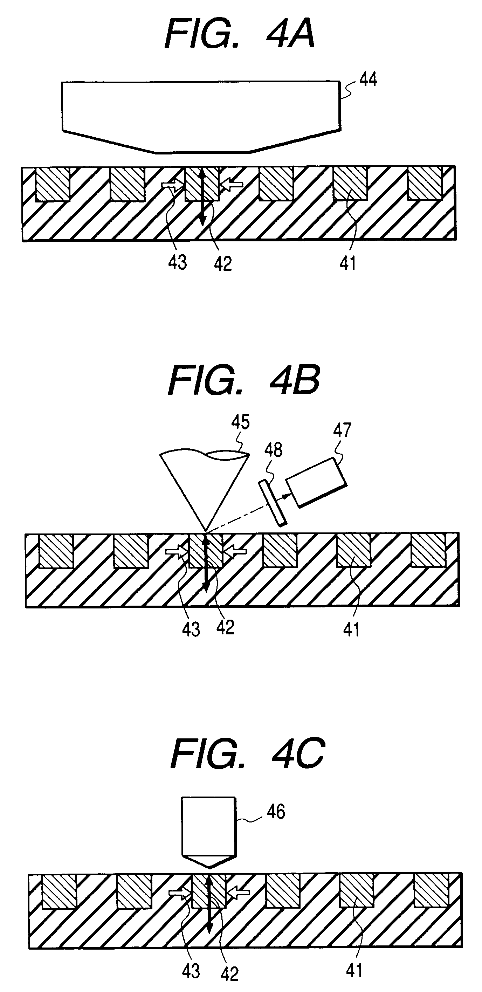

Figs.4A to 4C are schematic cross sectional views of three examples of reading information recorded on the magnetic recording medium of the first embodiment of the present invention, wherein recorded information is read from the magnetic recording medium fabricated in the same manner as shown in Figs.1 to 3.

Fig.4A depicts an example by means of magnetic head 44 for perpendicular recording; Fig.4B depicts an example by means of polarized filter 48 and polarization detector 47, detecting the polarized state of reflection light from light head 45 and magnetic particles 41; Fig.4C depicts an example by means of magnetic force microscope (MFM) tip. In these examples shown insofar, the magnetic recording medium in the example in Fig.1 is described, wherein compression stress 43 is applied onto the magnetic particles 41 with the resulting strong perpendicular anisotropy 42, but even on the magnetic recording medium in the examples shown in Figs.2 and 3, information can be recorded in a stable manner.

For reading in a corresponding manner, if the example shown in Fig.4C is provided with a system detecting the polarized state of reflection light, like the detection mechanism shown in Fig.4B, satisfactorily, use may be made of an additional tip of scanning probe microscope such as scanning near field optical microscope (SNOM) for substituted for magnetic force microscope(MFM).

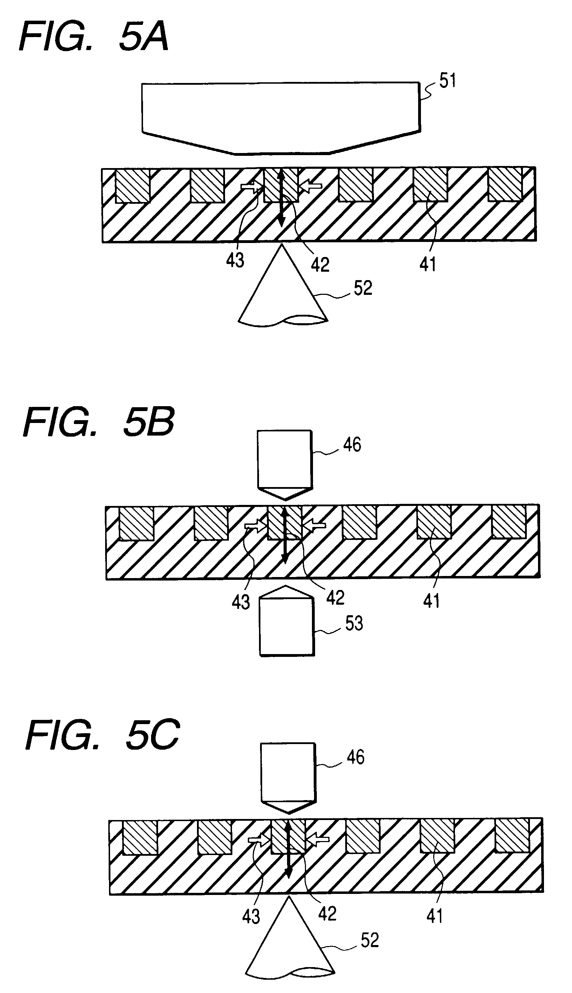

Figs.5A to 5C are schematic cross sectional views of three examples of writing information to be recorded to the magnetic recording medium of the first embodiment of the present invention, wherein an example is shown concerning the method of writing information to the magnetic recording medium thus fabricated as shown in Figs.1 to 3.

Fig.5A depicts a writing example using write head 51. For writing, heating laser beam 52 irradiates and heats magnetic particles (magnetic recording bits) 41 from the opposite side of the magnetic head 51. As apparently shown from the comparison with the stress 43 and the magnetic anisotropy 42 as shown in Figs.4A and 5A, the irradiation of the laser beam 52 elevates the temperature of the magnetic particles 41 as the writing subject and the periphery thereof, so that stress 43 is reduced as shown in slim line and the magnetic anisotropy 42 is correspondingly reduced. Thus, writing can be done readily. It is needless to say that the laser beam 52 should be irradiated so as to heat only the magnetic particles 41 as the writing subject and the periphery thereof by a method known as "top of brush recording", for example, while absolutely avoiding the irradiation of laser beam 52 on the magnetic particles 41 adjacent to the particles as the writing subject. When the irradiation of laser beam is terminated after recording, the temperature of the magnetic particles 41 and the periphery thereof is lowered, so that intense stress is again applied on the magnetic particles 41 to keep information in a stable fashion.

In the present example, laser beam 52 is irradiated from the opposite side of the substrate, but the magnetic head 44 and the head for irradiating laser beam 52 are integrally composed, whereby laser beam 52 can be irradiated from the same side of the magnetic head 44. In this case, the laser beam is irradiated not through the bottom part of the substrate but directly on the magnetic particles, more effectively for recording.

Fig.5B depicts an example wherein magnetic force microscope (MFM) tip 53 is arranged for writing, while scanning tunneling microscope (STM) tip 53 for heating is arranged on the opposite side of the substrate. For writing, tunneling current passes through the scanning tunneling microscope (STM) tip 53 so as to heat only the magnetic particles 41 as the writing subject and the periphery thereof, thereby reducing the stress 43 and the magnetic anisotropy 42, as shown in slim line.

Fig.5C depicts an example wherein magnetic force microscope (MFM) tip 46 is arranged for writing, while the irradiation head of laser beam 52 is used for heating.

Furthermore, Figs.4 and 5 depict how the compression stress works on the magnetic particles, and a mechanism generating anisotropy due to tensile stress similarly works to carry out writing and reading. If a sufficiently large outer magnetic field can be collimated and applied to a single magnetic particle, such heating mechanism is not necessarily required.

### EMBODIMENT II

Figs.6A to 6B are schematic explanatory views of the fundamental functions of the magnetic recording medium of the second embodiment of the present invention. As shown in Fig.6A, the substrate is made of material 111 with thermal hysteresis of volume change, in which magnetic particles 112 are arranged in an array pattern. Arrow 113 in the figure shows the magnetization direction at the initial state of these magnetic particles. By changing the temperature of the material 111 only magnetic particle and around the periphery of a bit (magnetic particle) to be recorded thereby modifying the shape around the magnetic particle, stress 114 can be applied on the magnetic particle. Consequently, the magnetic anisotropy of the magnetic particle is modified owing to the magnetostriction effect of the magnetic particle, so that the magnetization direction is changed from the direction shown by arrow 113 to the direction shown by arrow 115. Subsequently, the temperature restores the initial temperature. The material 111 has such thermal hysteresis of volume change, and even if the temperature restores the initial temperature, therefore, the stress 114 applied on the magnetic particles can be retained as it is. Thus, the magnetization direction is maintained, as is pre-modified into the direction shown by the arrow 115. More specifically, information is recorded as the change of the magnetization direction. This is true with the case that the initial state is as shown in Fig.6B and falls into the state shown in Fig.6A due to the thermal hysteresis characteristics.

If the magnetization component of the magnetic particle can be detected with a head capable of reading the magnetization direction shown by either arrow 113 or arrow 115, in this second embodiment, only the magnetization direction shown by either the arrow 113 or the arrow 115 can be detected, while other directions cannot be detected. Thus, information is recorded, by matching the individual states to the recording data of 1 and 0. In this case, even if the inversion of the magnetization direction has happened, no problem occurs, as shown by arrow 113 or arrow 115.

By modifying the intensity of the magnetic anisotropy, the transition of ferromagnetism to super-paramagnetism can be controlled, whereby information is recorded by using a head capable of reading the magnetization state with ferromagnetism, if 1/0 corresponds to the ferromagnetism/super-paramagnetism, instead of the aforementioned in-plane /perpendicular magnetization.

The volume change with hysteresis characteristics can be generated, by modifying the lattice constant following the modification of the crystal or the transition from crystal phase to amorphous phase.

Examples for carrying out the present embodiment will now be described below.

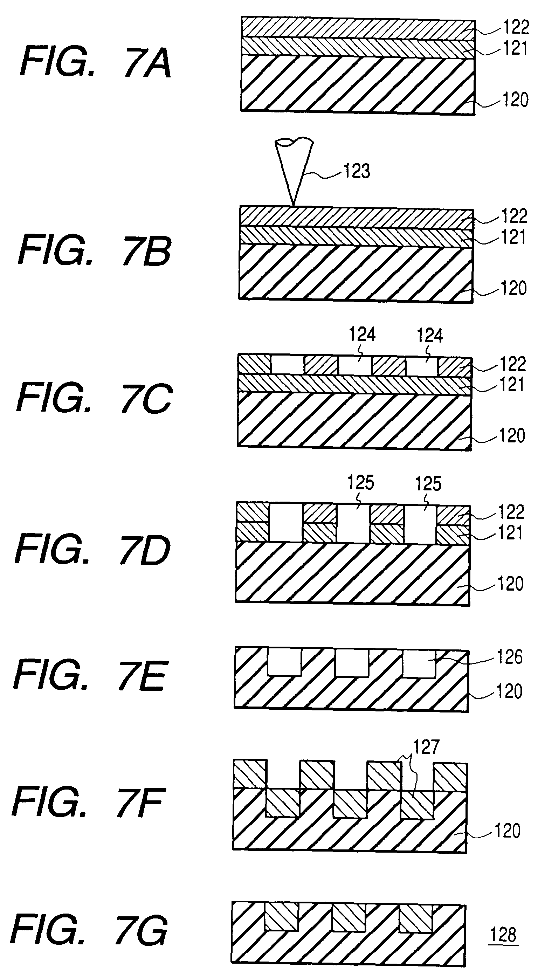

Figs.7A to 7G are cross sectional views of one example of the fabrication chart of a magnetic recording medium according to the second embodiment of the present invention. Substrate 120 is composed of barium metatitanate (BaTiO₃) of crystallite of tetragonal system. Then, the a-axis of the BaTiO₃ crystallite should be arranged perpendicularly to the surface of the substrate 120. The substrate surface should preliminarily be polished. As the substrate, satisfactorily, use may be made of single crystal BaTiO₃ with the a-axis perpendicular to the surface of the substrate, besides polycrystalline barium metatitanate.

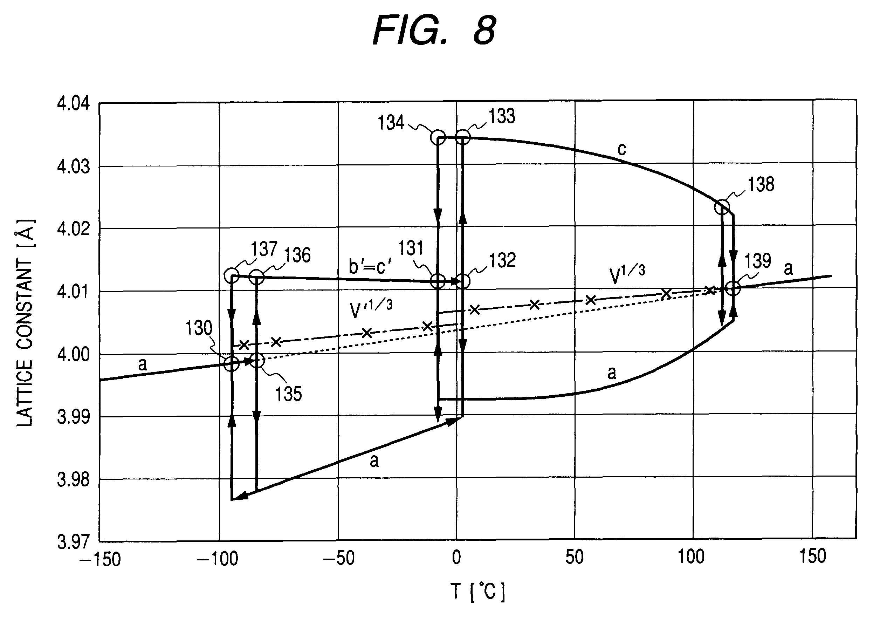

It has been known that the barium metatitanate (BaTiO₃) used in the present example has such temperature-lattice constant characteristics as shown in Fig.8 (see for example Table of Physical Constants, New Edition, 1969, page 126, Asakura Press, etc.). According to the reference, the relation between the temperature-lattice constant of BaTiO₃ has hysteresis characteristics around 0 °C. By heating BaTiO₃ at a state pre-cooled lower than point 130 to a temperature of point 135, the crystal phase transition just then occurs, so that a new crystal structure emerges, in which the lattice constants between a-axis and b-axis and c-axis are modified. When the temperature is raised in the aforementioned manner, the lattice constants of the b-axis and c-axis vary, following the curve 136 - 131 - 132. When the temperature reaches the temperature shown by point 132, the transition of the crystal phase again occurs, involving the change of the lattice constants of the b-axis and c-axis into point 133. When the temperature is further raised, the lattice constant of the c-axis continuously changes, following the curve 133 - 138. When the temperature is lowered from the zone above the curve 133 - 138, adversely, the lattice constant of the c-axis continuously changes, following the curve 138 - 133 - 134. Unlike the case with temperature elevation, no crystal phase transition occurs in this case, even at the temperature shown by point 133, but when the temperature reaches the temperature shown by point 134, the crystal phase changes, which involves the changes of the lattice constants of the b-axis and c-axis from point 134 to point 131. Through further cooling, following the curve 131-136-137, the lattice constants continuously change, until the temperature reaches the temperature shown by point 137, where the crystal phase again changes, leading to the change of the lattice constant into point 130. As apparently shown if attention is focused on the temperature-lattice constant hysteresis characteristics in the temperature zone including the points 131 and 133, the lattice constant of the material varies within a given range of increment and decrement wherein zero centigrade is positioned centrally if the material is repeatedly subjected to heating and cooling, so that the material is retained at that state at zero centigrade.

By retaining the material at zero centigrade at such a state that stress 114 is applied on all the bits at an initial state, to the substrate at a state on the carve 133-138 (method of preparing the state is described later), elevating the temperature around a bit to be recorded (magnetic particle) along the direction from the point 133 to the point 138 for a short time, depending on the recording information, and subsequently restoring zero centigrade to retain the material at that temperature, only the periphery of the bit to be recorded is retained at the state shown in Fig.6A. Thus, given recording is on completion at the bit position.

The method of fabricating a recording medium will be described again in Fig.7. As shown in Fig.7A, firstly, substrate 120 is introduced into a vacuum chamber, and silicon layer 121 is grown at about 100 nm on the surface by sputtering evaporation. Drawing out the substrate 120 from the vacuum chamber, positive type electron beam resist 122 is coated on the layer. As shown in Fig.7B, subsequently, the substrate is introduced into an electron beam patterning system (not shown in the figure) to irradiate electron beam 123 following the same pattern as that of the magnetic particle array intended to be fabricated on the surface of the resist layer 122. As shown in Fig.7C, subsequently, the substrate is drawn out for development, to recover hole alignment 124. As shown in Fig.7D, then, the substrate is introduced into an etching system, followed by RIE (reactive ion etching) in a mixture gas of CF₄ and O₂, to fabricate hole array 125 on the silicon layer 121. Immediately when the silicon layer is sufficiently etched to expose BaTiO₃, the gas is replaced with argon (Ar) for etching, as shown in Fig.7E, whereby hole array 126 is completed in the substrate 120. In the present example, furthermore, the silicon layer 121 grown on the substrate 120 is used as the mask for argon ion etching, but SiO₂ and Ti may satisfactorily be used in place of the silicon layer 121. These layers may satisfactorily be fabricated by resist heating evaporation, EB evaporation, CVD and the like, other than sputtering evaporation. For the growth of SiO₂, in particular, spin on glass may be used by spin casting. As shown in Fig.7F, then, hole-pierced substrate 120 is heated for example at 40 °C for one minute, which is then introduced into a vacuum chamber. By this procedure, BaTiO₃ is prepared at a state on the curve 133 - 138, as shown in Fig.8. By subsequently cooling the whole substrate 120 to retain the substrate at 0 °C, for example, iron 127 is deposited at perpendicular incidence on the surface of the substrate. Through the procedure, the magnetic material can be embedded into the holes at such a state that the hole diameter in the BaTiO₃ is nearly the maximum. The deposition should be terminated when the holes are absolutely embedded, to draw out the substrate into atmosphere (satisfactorily at room temperature). As shown in Fig.7G, then, the iron deposited on the parts excluding the holes is removed in atmosphere, by polishing by means of polishing agents (slurry) and polishing pads. When the substrate surface is polished as flat, the polishing procedure is terminated. If necessary, a protective layer or the like may be formed on the substrate surface.

After the termination of the aforementioned fabrication processes, the whole substrate 128 including the magnetic particles is cooled for example to about -30 °C and retained as it is for one minute. Through the procedure, the lattice constant is reduced, while the hole diameter in the substrate is also reduced. Subsequently, the whole substrate including the magnetic particles is stored at 0 °C. Because the substrate is cooled after iron deposition at a state with a larger lattice constant (at a state with a larger hole diameter), to retain the substrate at a state with a smaller hole diameter, compression stress is applied from the substrate on the iron 127. In that case, all the bits are at a state applied with stress, which indicates that the substrate is retained at a position where the curve 131 - 132 crosses with the line representing zero centigrade. Because the magnetostriction constant of iron is positive, the direction applied with compression stress due to the magnetostriction effect falls into a direction of hard axis, while the direction perpendicular to the substrate surface falls into a direction of easy axis, so that the magnetization of the iron directs toward the perpendicular direction.

Iron is used as a magnetic material in the present example, but any ferromagnetic material with a positive magnetostriction constant may satisfactorily be used, other than iron. When the etching process shown in Fig.7E is carried out at a temperature above room temperature at the aforementioned process, furthermore, the heating process of the hole-pierced substrate 120 shown in Fig.7F can be skipped. As described above, the heating process is a simple process to prepare the substrate BaTiO₃ at a state on the curve 133-138 shown in Fig.8. Therefore, it is apparent that the substrate is at a state on the curve 133-138 if the process immediately before the heating process is carried out above room temperature.

The recording medium fabricated as has been described above is generally used at about 0 °C. The medium should be retained at about 0 °C during storage and record reading. Except the bit to be written (magnetic particle), the medium should also be retained at about 0 °C even during writing. For completely deleting the whole information, the whole substrate 128 including the magnetic particles is cooled below -30 °C. Consequently, all the bits are retained at a state under applying of stress 114.

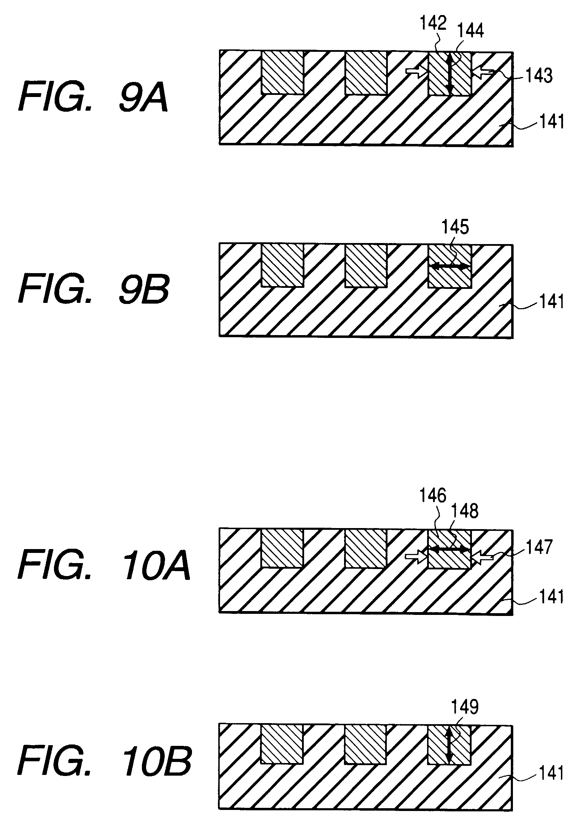

Figs.9A and 9B are schematic views depicting one example of the recording processes on the magnetic recording medium of the second embodiment of the present invention. Fig.9A is a schematic cross sectional view of the initial state of the fabricated recording medium under storage at almost zero centigrade, wherein compression stress 143 is applied from the peripheral substrate 141 on all the magnetic particles 142. At that state, the magnetization direction of the magnetic particles 142 directs toward perpendicular direction 144. Among these magnetic particles 142, only the periphery of the magnetic particle 142 present at the position of a bit to be recorded is heated to 10 °C for a short time, to trigger the change of the crystal phase, whereby the hole diameter is increased because the lattice constant of the substrate 141 around the bit to be recorded is enlarged, so that compression stress 143 on the magnetic particles 142 is eliminated. As shown in Fig.9B, therefore, the direction of easy axis is changed so that the magnetic particles 142 have magnetization 145 along the in-plane direction. After heating is then terminated, the periphery of the recorded bit restores almost 0 °C, like the peripheral substrate, but the magnetization direction of the magnetic particles 142 is retained owing to the hysteresis characteristics of BaTiO₃. More specifically, the magnetic particles are stably maintained at a state where the curve 133 - 134 crosses with the line of zero centigrade. By recovering perpendicular and in-plane magnetization directions through such mechanism and then matching the individual directions to 0 and 1, information can be recorded.

If the periphery of bits except the bit to be recorded is then heated to cause phase transition, recording is done even on the bits. So as to singly heat a specific bit, only the periphery of the bit to be recorded should be heated with laser beam. Even if the spot diameter of laser beam is larger than the recorded bit, a zone at an elevated temperature up to the phase transition point is limited to only the periphery of the bit to be recorded. The method is generally called as "top of brush recording", which can elevate the temperature of the zone below the wave length of light.

In addition to laser beam, furthermore, use is made of electron beam thinly collimated, and scanning probe microscope (SPM) represented by scanning tunneling microscope (STM), for such heating.

Information on one specific bit can be deleted by cooling the periphery of the magnetic particle to about -30 °C. By using the system equipped with the mechanism, the present invention is also applicable as a recording medium of rewritable type. When it is difficult to fabricate a cooling head, the present invention is applicable as a recording medium of write once type. Even in this case, the whole disk is cooled, whereby all the data can be deleted therefrom.

With respect to the relation between the temperature-lattice constant of BaTiO₃, as shown in Fig.8, the change of the lattice constant with hysteresis is also observed in other temperature zones. For using the substrate as a recording medium, other temperature zones may also be satisfactory, provided that the substrate can keep the thermal hysteresis and sufficient change of the lattice constant in the zones where the required temperature can additionally be kept readily. In the aforementioned example, the thermal hysteresis zone in which zero centigrade is present centrally and the temperature maintenance can be retained stably is used among the three thermal hysteresis zones shown in Fig. 8. Other than BaTiO₃, additionally, use may be made of any other material with hysteresis of the relation between the temperature-lattice constant, in which the change of the lattice constant is sufficient enough for the magnetic material to cause the change of easy axis.

Herein, iron is used as the magnetic material, but even by using a material with a negative magnetostriction constant, for example cobalt, recording can be done. Figs.10A and 10B depict an example wherein cobalt 146 is used. When compression stress 147 is applied, then, the direction works as the direction of easy axis to direct the magnetization 148 toward in plane. When the compression stress 147 is eliminated, the perpendicular direction works as the direction of easy axis to direct magnetization 149 toward perpendicular direction. Except those immediately described above which are different from the example of iron as described in Fig.9A and Fig.9B, the fabrication method of the recording medium and the method for preparing the initial state are the same as described above.

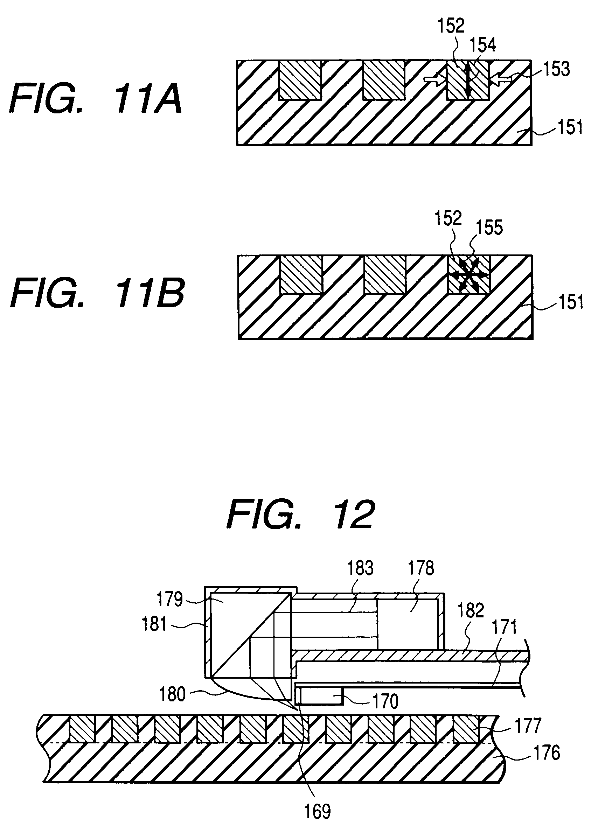

Figs.11A and 11B are schematic views depicting one example of the recording processes on the magnetic recording medium of the second embodiment of the present invention. In this example, recording is done on the recording medium fabricated according to the example described in Fig.7 by using finer iron particles as recording bits so as to elevate the recording density, compared with the recording densities shown in Figs.9 and 10. At a state with no applying of compression stress, therefore, magnetic particles 152 are at an super-paramagnetic state as shown in Fig.11B, namely at a state with no identified magnetization direction. Even in this example, the magnetic particles 152 at an initial state of the disk in completion have strong anisotropy shown by arrow 154, due to the compression stress 153 from the peripheral substrate 151, as shown in Fig.11A. Therefore, the magnetic particles are at a ferromagnetic state. By heating the magnetic particles 152 and the periphery to 10 °C to cause the change of the crystal phase of the substrate 151 and thereby change the volume of the periphery, compression stress 153 onto the magnetic particles 152 can be eliminated. As shown in Fig.11B, therefore, the magnetic particles are modified into a super-paramagnetic state. By individually corresponding the ferromagnetic state and paramagnetic state of the magnetic particles 152 to 0 and 1 (or 1 and 0) through such mechanism, information can be recorded.

In place of the barium metatitanate in the aforementioned examples, use may be made of chalcogenide glass as the substrate. The material is currently used as a recording medium known as digital video disk (DVD-RAM) rewritable, to record information on DVD-RAM by detecting the difference in photo-reflection ratio due to the transition between crystal and amorphous phases. In this present example, recording is effected, by utilizing such a property of chalcogenide glass that the volume varies between crystal state and amorphous state. Chalcogenide glass characteristically has a small volume at its crystal state but a larger volume at its amorphous state. Thus, the magnetic particles are applied with compression stress when the periphery of the recorded bit is at a crystal state, but is never applied with the stress when the periphery is at an amorphous state. Utilizing the property, information is recorded in the same fashion as those in the aforementioned examples.

A recording medium is fabricated as follows. The substrate is composed of amorphous chalcogenide glass (TeGeSnO). In the same manner as for the procedures shown in Fig.7, holes are pierced in a matrix form into chalcogenide glass of a disk shape and with the mirror polished surface, by electron beam lithography. The fabricated hole-pierced substrate is introduced into the vacuum chamber, where iron is deposited at perpendicular incidence toward the surface of the substrate. Once the hole is filled with iron, deposition is terminated to draw out the substrate. The iron deposited on the parts excluding the holes is removed, by polishing by means of polishing agents (slurry) and polishing pads, until the disk surface is flat. If necessary, a protective layer is formed on the disk surface. When the substrate is made of amorphous chalcogenide glass (TeGeSnO), all these procedures can be carried out at room temperature, unlike the case that the substrate is made of barium metatitanate. Furthermore, the fabricated disk is not required to be cooled or stored at 0 °C. This is because the periphery of the magnetic particle at its initial state is at an amorphous state and the phase transition between crystal and amorphous states occurs under heating up to about the melting point but never occurs at room temperature.

The periphery of the magnetic particle is at an amorphous state in the disk thus fabricated at its initial state, and as shown in Fig.6A, therefore, no stress is applied on the magnetic particle. Information is recorded on the magnetic particle, as described below. By heating the periphery of a bit to be recorded around the melting point via laser beam, the phase transition between crystal and amorphous states occurs in the substrate around the bit to be recorded. Thus, the substrate falls into a crystal state, to increase the volume of the periphery of the recorded bit, so that the magnetic particles are applied with compression stress as shown in Fig.6B, to attain information recorded.

So as to modify the amorphous state of chalcogenide glass around the recording bit into a crystal state, the chalcogenide glass is heated immediately below the phase transition point via laser beam, followed by annealing. For modifying adversely the crystal state into the amorphous state, the temperature should be raised above the phase transition point, followed by rapid cooling. These are reversible changes and applicable to DVD-RAM, whereby rewritable recording medium can be attained. In the present example, such rewritable recording medium can be achieved through the modification of laser output, with no use of any system so as to maintain the temperature at zero centigrade, as is the case with the substrate composed of barium metatitanate. Thus, the overall system can be simplified. For integrally deleting all the information, the whole disk is heated immediately below the phase transition point, followed by annealing, to prepare an amorphous state.

In the aforementioned examples, the shapes of all the recording medium are described as disk type, but any shape other than disk type may be satisfactory, including card shape, individual faces of rectangular parallelepiped and the like.

Fig.12 is a schematic cross sectional view of one example of the relation of the principal part of the head part for reading and writing recorded information on the magnetic recording medium of the second embodiment of the present invention with the magnetic recording medium of itself, wherein the cross section of the head part is shown.

The present example corresponds to an example of a magnetic recording medium wherein the substrate is composed of barium metatitanate, and the whole system is arranged in a mechanism retained at a temperature of zero centigrade. Reference numeral 176 represents a substrate, and recording medium 177 in magnetic particle layers arranged in a matrix form is formed on the upper part of the substrate 176. A head part composed of magnetic head 169 with reading function via magnetoresistive effect, slider 170, magnetic head arm 171, semiconductor laser 178, mirror 179, lens 180, housing 181 and arm 182, is arranged in such a manner that the head part might be opposite to the recording medium 177. In the figure, herein, driving systems, electric circuit systems, supporting devices and the like are omitted. The semiconductor laser 178, the mirror 179 and the lens 180 are fixed on the housing 181, which is then fixed on the arm 182. The magnetic head 169 is arranged around the lens 180 and the recording medium 177. The magnetic recording medium in accordance with the present invention can perform data writing if the temperature of the magnetic particles and the periphery thereof is raised. Therefore, only a reading magnetic head utilizing magnetoresistive effect is incorporated into the magnetic head 169.

Laser beam 183 irradiated from the semiconductor laser 178 is reflected on the mirror 179, which is then incident into the lens 180. The lens 180 is a part of convex lens, and the laser beam 183 is collimated into the layers of magnetic particles in the recording medium 177. In a manner corresponding to the data on an independent magnetic particle, the laser beam 183 from the semiconductor laser 178 is irradiated under control. The magnetic head 169 is positioned immediately above the collimated position of the laser beam 183, to output the data correspondingly to the magnetization direction of the independent magnetic particle. The magnetic head 169 is arranged immediately above the collimated position of the laser beam 183, because it is never required then to sift the head position for recording or reading. If the head 169 is arranged differently, satisfactorily, the head position may sift for complementing the difference prior to recording or writing.

It is needless to say that an optimum reproduction head matching the composition of the magnetic recording head should be used, and depending on the magnetic recording medium, magnetic force microscope (MFM) and scanning probe microscope (SPM) such as scanning near field optical microscope (SNOM) should be used for reading. If SNOM is used, herein, reading is effected by utilizing the Car effect or the Faraday effect. Accordingly, a detector detecting photo-polarization state is required in addition to the tips.

In accordance with the present invention, it is possible to control the direction of easy axis of even superfine magnetic particles of which the shape magnetic anisotropy is controlled with much difficulty, under the stress from the substrate over the magnetic particles. Thus, microfine recording bits can be fabricated, to attain a high density magnetic recording medium and realize super-high density magnetic recording with strong resistivity against thermal agitation .

## Claims

1. A magnetic recording medium with independent magnetic particles formed in a substrate: wherein, the magnetic recording medium is provided with magnetic anisotropy when compression or tensile stress is applied from the substrate on the magnetic particles, correspondingly to at least one of two types of recording information to be recorded on the magnetic particles.

2. A magnetic recording medium according to claim 1, wherein the compression or tensile stress is applied at room temperature on the each independent magnetic particle.

3. A magnetic recording medium according to claim 2, wherein the magnetostriction constant of the material composing the magnetic particles is positive or negative.

4. A magnetic recording medium according to claim 2, wherein the boundary between the independent magnetic particles fabricated in the substrate and the substrate is composed of an alloy of (the) two (materials each) composing the particles and the substrate and wherein tensile stress is applied on the each individual magnetic particle at room temperature.

5. A magnetic recording medium according to claim 2, wherein the magnetic recording medium is provided with magnetic anisotropy when compression stress is applied at room temperature on the independent magnetic particles fabricated in the substrate from the upper and lower faces thereof.

6. A magnetic recording medium according to claim 5, wherein the substrate to be applied from the upper face thereof with compression stress is a transparent material.

7. A magnetic recording medium according to claim 1, wherein the substrate is a material with thermal hysteresis characteristics of volume change.

8. A magnetic recording medium according to claim 7, wherein the medium being capable of modifying the magnetization state into in-plane magnetization state and perpendicular magnetization state.

9. A magnetic recording medium according to claim 7, wherein the individual magnetic particles comprise a material capable of transition between super-paramagnetic state and ferromagnetic state, depending on the volume change of the substrate.

10. A magnetic recording medium according to claim 7, wherein the volume change of the substrate is derived from the phase transition of the crystal.

11. A magnetic recording medium according to claim 7, wherein the volume change of the substrate is derived from the phase transition of the crystal between crystal state and amorphous state.

12. A method for fabricating a magnetic recording medium with magnetic anisotropy, comprising forming a great number of perpendicular holes regularly arranged on the surface of the substrate, heating the substrate to a given temperature, depositing a magnetic material on the heated substrate from the perpendicular direction to the substrate surface, putting the substrate back to room temperature after a sufficient deposition time enough for the inside of the holes to be filled with the magnetic material passes, and polishing the surface side of the substrate.

13. A magnetic recording medium according to claim 12, comprising preparing openings regularly arranged on the substrate as through-holes with different opening diameters between the two sides, bonding a thin board of the same material as that of the substrate to the substrate face with openings each with a larger diameter to deposit the magnetic material from the substrate face with openings with a smaller diameter from the perpendicular direction to the substrate surface, and polishing the deposited side of the substrate after the inside of the holes is filled with the magnetic material to bond a thin board composed of a transparent material to the deposited side and then put the substrate back to room temperature.

14. A method for fabricating a magnetic recording medium, comprising preparing a substrate composed of a material with thermal hysteresis characteristics of volume change, forming a mask material layer to be readily etched in a reactive gas and an electron beam resist layer on the substrate, piercing the resist layer to prepare holes by irradiating the resist layer with electron beam prior to development, piecing the mask material layer in a reactive gas to prepare holes while the resist layer is still left as it is, forming an array of regular holes on the substrate by etching in a non-reactive gas through the holes formed in the mask material layer, and filling the magnetic material in the holes at above a given temperature.

15. A method for fabricating a magnetic recording medium according to claim 14, wherein the volume change of the substrate is derived from the crystal phase transition or the phase transition from crystal to amorphous phase and wherein the magnetic material is filled at room temperature into the regular holes formed on the substrate.

16. A magnetic recording system comprising a magnetic recording medium with magnetic anisotropy provided under the applying of compression or tensile stress on each of the independent magnetic particles fabricated in the substrate at room temperature, a head for recording magnetic information on the individual magnetic particles of the magnetic recording medium, a head for reading the magnetic information recorded on the individual magnetic particles of the magnetic recording medium, and a head for heating the magnetic particles as recording subjects and the periphery thereof when magnetic information is to be recorded on the individual magnetic particles of the magnetic recording medium.

17. A magnetic recording system according to claim 16, wherein the head for heating the magnetic particles and the periphery thereof is for the irradiation of laser beam.

18. A magnetic recording system comprising a recording medium to record information via magnetic anisotropy from the volume change of the substrate, a recording head for the irradiation of laser beam, a reading head, a means for supporting the head and a driving device therefor, wherein only a recorded bit and the periphery thereof are heated to locally trigger the volume change of the substrate thereby carrying out recording.
